# FASCICULE DE BREVET EUROPEEN

(11) **EP 0 765 211 B1**
(45) Date de publication et mention de la délivrance du brevet: **19.08.1998**
(21) Numéro de dépôt: 95923408.9
(22) Date de dépôt: 19.06.1995
(51) Int. Cl.: B29C 43/42, B60J 10/02

(54) **PROCEDE ET DISPOSITIF POUR LE POSTFORMAGE D'UN PROFILE EXTRUDE ET APPLIQUE SUR UN OBJET**
VERFAHREN UND VORRICHTUNG ZUM NACHFORMEN EINES EXTRUDIERTEN UND AUF EIN OBJEKT AUFGEBRACHTEN PROFILSTRANGES
METHOD AND DEVICE FOR POSTFORMING AN EXTRUDED PROFILED SECTION APPLIED TO AN OBJECT

(30) Priorité: 17.06.1994 DE 4421299
(43) Date de publication de la demande: 02.04.1997
(73) Titulaire: SAINT-GOBAIN VITRAGE, 92400 Courbevoie (FR)
(72) Inventeur: KITTEL, Florenz, 52146 Würselen (DE); KRUMM, Helmut, 52074 Aachen (DE); JOERIS, Herbert, 52146 Würselen (DE)
(74) Mandataire: Breton, Jean-Claude
(86) Numéro de dépôt international: FR9500807
(87) Numéro de publication internationale: WO9535193

(56) Documents cités:
- EP-A- 0 258 128
- EP-A- 0 561 743
- FR-A- 2 461 191

## Description

La présente invention concerne un procédé de postformage de la zone de transition entre la partie initiale et la partie terminale d'un profilé extrudé constitué d'un polymère, formant un cadre fermé, appliqué sur la surface d'un objet et comportant une gorge. Dans ce procédé, un poinçon dont la forme correspond à la section voulue du profilé est abaissé sur ce dernier en pivotant. L'invention concerne en outre un dispositif approprié pour la mise en oeuvre du procédé.

Il est connu de pourvoir des objets de différentes sortes d'un profil d'étanchéité en forme de cadre en polymère, et en particulier en élastomère en extrudant directement un profilé en matière extrudable sur l'objet. Pour les vitrages d'automobiles en particulier, des procédés de ce genre sont appliqués à grande échelle. Pour cela, on utilise tant des systèmes extrudables qui polymérisent ou se réticulent, tels que des systèmes de polyuréthane durcissant à l'humidité, que des élastomères thermoplastiques. Des procédés de ce genre sont décrits en détail par exemple dans les brevets européens EP-A-0 421 833 et EP-A-0 524 092.

Quand on applique par extrusion un cadre profilé fermé sur lui-même sur la surface d'un objet, il faut postformer la jonction entre le début du cordon profilé extrudé et la fin de celui-ci car il se produit forcément une accumulation de la masse visqueuse avec une forme plus ou moins indéfinie. Pour postformer cette zone de transition indéfinie on connaît différents procédés et dispositifs.

D'après un procédé connu par le DE 40 25 166 A1, dans lequel un cordon de polyuréthane profilé est appliqué par extrusion contre une surface, on laisse durcir le cordon extrudé, on extrait un tronçon du cordon à l'emplacement de transition et on colle à cet emplacement un tronçon correspondant d'un cordon profilé et durci ailleurs.

Selon un autre procédé connu d'après EP-A-524 060 on retire également un tronçon du profilé par un moyen mécanique après son durcissement. On dépose ensuite à cet emplacement un moule calibré recouvrant les deux extrémités contigües du profilé en cadre et on injecte et on durcit dans le moule un polymère durcissant relativement vite pour compléter le cadre profilé.

En outre, on sait comment postformer le cadre profilé à l'emplacement de transition lors de l'extrusion avant le durcissement du polymère à l'aide d'outils de formage par compression. Un outil connu d'après EP-B-421 833 se compose d'un plateau inférieur dans lequel est ménagée une cavité de moulage et qui peut être en une ou deux pièces. Le plateau supérieur de compression est abaissé sur le plateau de moulage inférieur où il forme le profilé.

Un procédé de ce type, bien connu et décrit dans le DE 90 115 73 U1, sert au postformage d'un cordon profilé, constitué d'un système réactif à base de polyuréthane, et extrudé et appliqué sur un vitrage. Dans ce procédé, le moule se compose d'un dispositif muni de deux mâchoires, qui est guidé en position ouverte à partir de l'extérieur au-dessus de la partie périphérique du vitrage, équipé du cordon profilé. L'axe de pivotement des deux mâchoires est disposé en dehors de l'objet. Après le positionnement du dispositif du moule, dans lequel la surface du vitrage en rapport avec le cordon profilé est disposée dans un évidement correspondant de l'une des mâchoires, l'autre mâchoire, qui imprime sa forme au cordon, bascule autour de l'axe de pivotement et est pressée sur ce cordon.

Dans le cas où le cordon possède une gorge avec une contre-dépouille, les procédés de postformage avant durcissement précédents ne conviennent pas. Il en va de même lorsque la paroi de la gorge est cannelée d'un côté où la paroi se referme. Ces deux dispositions sont courantes lorsque, comme dans le document EP-B-258 128, on désire obtenir une fixation réversible d'un vitrage automobile dans la baie d'une carrosserie. Dans ce cas, l'accrochage entre le mastic de pose et le cadre profilé se fait sans collage uniquement grâce à la forme de la gorge du profilé sur laquelle s'accroche le mastic. Mais par là même, si l'on utilise un poinçon traditionnel pour former la gorge, il sera impossible de l'extraire avant durcissement sans déformer définitivement le profilé.

L'invention se donne pour tâche de concevoir un procédé de postformage la zone de transition d'un cadre extrudé sur un objet qui peut servir dans des cas très divers et qui convienne aussi au postformage de sections profilées présentant des contre-dépouille ou des cannelures d'ancrage.

Le procédé de l'invention se caractérise en ce qu'un organe de pressage supérieur en forme de rouleau, dans la surface cylindrique duquel est ménagé un moule est conduit sur la zone de transition à postformer par rotation autour de l'axe du cylindre et par translation parallèlement à la surface de l'objet et perpendiculairement à la direction du cordon. De préférence, les mouvements de rotation et de translation sont combinés pour que l'organe de pressage déroule sa surface sur le cordon sans glissement par rapport à lui.

D'une manière plus générale, le problème de l'invention est de trouver une méthode pour conformer une matière malléable déposée sur la surface d'un objet pour obtenir un cordon avec une gorge rectiligne qui possède une contre-dépouille ou des cannelures d'ancrage.

Le procédé de l'invention se caractérise parce qu'on introduit dans la matière puis on l'en extrait un poinçon en forme de profilé dont la section est localement plus étroite que la gorge et qui est animé de mouvements de rotation et de translation perpendiculairement à sa direction, de préférence, le premier mouvement est un mouvement de translation vers la surface de l'objet et il est suivi d'un mouvement de rotation et simultanément de translation parallèlement à la surface.

Dans une variante, le deuxième mouvement de rotation et celui de translation parallèlement à la surface sont réglés l'un sur l'autre de telle sorte que le mouvement du poinçon s'effectue sans glissement au fond de la gorge.

Avantageusement, le poinçon fait partie d'un rouleau cylindrique qui roue sans glissement par rapport à la surface de l'objet.

Appliqué à la zone de transition entre début et fin d'un cordon à gorge extrudé en boucle, le procédé de formage selon l'invention permet de déplacer de façon sélective dans un sens déterminé le surplus de matériau forcément excédentaire dans la zone de transition, c'est-à-dire dans le sens de l'avance du rouleau cylindrique, support du poinçon en forme de profilé. Quelle que soit la quantité de l'excédent, il peut s'étendre sans entraves. D'autre part, la rotation du rouleau fait commencer la déformation très tôt, c'est-à-dire à un moment où le formage proprement dit n'est pas encore achevé. Ce formage et cette déformation simultanés permettent d'obtenir des effets spéciaux supplémentaires. La rotation du rouleau avec son poinçon permet pour la première fois de postformer des profilés comportant des contre-dépouilles grâce à la forme ainsi qu'aux mouvements du poinçon. La pénétration du poinçon se fait très progressivement, son déplacement latéral et sa rotation terminant de donner sa forme à la gorge tandis que l'extraction se fait sans modifier la forme qui vient d'être créée, en particulier les contre-dépouilles et/ou les cannelures d'ancrage correspondantes ne sont pas endommagées ni a fortiori détruites.

Le mouvement du rouleau, support du poinçon peut varier selon la forme du cordon profilé qu'il faut postformer. Par exemple, pour certains profilés, le rouleau peut être conduit sur le cordon à profiler par un déroulement pur c'est-à-dire par un déplacement exempt de mouvement relatif de glissement entre la surface de la masse à postformer et la surface du rouleau en contact avec celle-ci. Cependant, à certains moments du postformage des contre-dépouilles il peut falloir régler indépendamment l'une de l'autre la vitesse de rotation du rouleau et la vitesse d'avance linéaire. En particulier, il peut convenir alors d'imprimer une vitesse de rotation accrue pendant la deuxième phase du postformage afin d'empêcher que les saillies du rouleau, essentiellement le poinçon, formant les évidements et les contre-dépouilles provoquent des déformations indésirables du profit.

Le procédé selon l'invention peut servir à postformer les systèmes polymères les plus divers. Si le cordon profité est extrudé par un système réactif, il est évident que le postformage doit avoir lieu immédiatement à la suite de l'extrusion, avant que le cordon extrudé commence à durcir par réaction de polymérisation. C'est le cas par exemple dans le système du polyuréthane durcissant à l'humidité que l'on utilise à grande échelle actuellement ou dans les systèmes de polyuréthane à deux composants. En revanche, quand on extrude le cordon profilé avec un polymère thermoplastique, il n'est pas nécessaire que le postformage ait lieu immédiatement après l'extrusion : il peut aussi se faire à un moment ultérieur quelconque. Dans ce cas, il suffit de veiller à ramener le matériau à l'état plastique par le réchauffement adéquat de la masse à postformer.

Comme avec les outils de postformage connus, il faut choisir des matériaux appropriés pour le rouleau ou enduire la surface de l'outil avec des substances appropriées pour empêcher l'adhérence entre la surface du moule et la masse polymère à postformer. Les revêtements antiadhérents sont connus et seront choisis en fonction du polymère utilisé dans chaque cas particulier pour le profilé à extruder.

La matière constituant l'objet sur lequel le cordon profilé en boucle doit être appliqué par extrusion ou la forme de cet objet est au fond sans importance. Par exemple, il peut s'agir là de vitrages, en particulier de vitrages automobiles sur lesquels on applique par extrusion un cadre d'étanchéité en élastomère, le joint pouvant exercer d'autres fonctions comme par exemple le centrage du vitrage dans la baie. Peu importe que le vitrage soit en verre ou en matière plastique transparente ou qu'il soit recouvert d'un émail transparent ou opaque, d'une couche mince ou d'un film plastique. De même, il est possible de pourvoir n'importe quels objets d'un cordon profilé en boucle, celui-ci ayant aussi alors une autre fonction que celle d'assurer l'étanchéité.

D'autres caractéristiques, avantages et détails de l'invention ressortent des revendications et de la description de différents exemples de réalisation illustrés par les dessins dans lesquels :
la **figure 1** représente de façon schématique la zone de transition d'un cadre profilé appliqué sur une feuille de verre par le procédé d'extrusion,
la **figure 2** représente de façon schématique les phases successives du postformage du profil représenté à la figure 1,
la **figure 3** représente de façon schématique les phases successives pour un cadre profilé ayant une autre section de profil,
la **figure 4** représente en vue latérale un dispositif de réalisation du procédé, et
la **figure 5** représente en coupe un autre dispositif de réalisation du procédé.

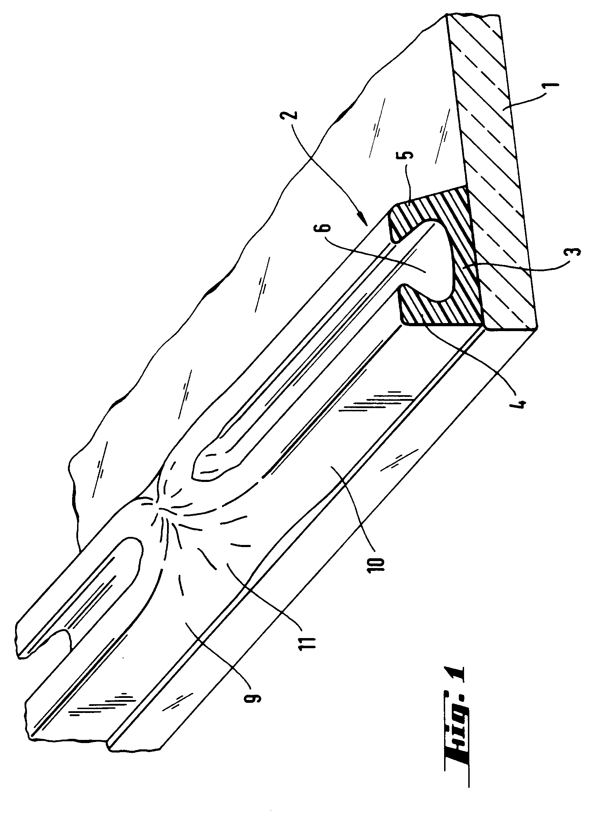

Le procédé selon l'invention est décrit ci-après en corrélation avec le pré-équipement de feuilles de verre, tels que des vitrages d'automobiles, prévus pour se monter par collage. La figure 1 représente en coupe une feuille de verre 1 de ce genre qui est pourvue sur le bord d'un profilé périphérique 2. Le profilé périphérique 2 est constitué d'un élastomère extrudable et s'applique par extrusion à la surface du verre au moyen d'une tête d'extrusion en mouvement relatif par rapport au vitrage et notamment conduite par un robot à sa périphérie après un traitement préalable de sa surface.

Le cordon profilé 2 est essentiellement en forme de U avec un fond 3 et deux parois latérales 4 et 5. Les surfaces intérieures opposées l'une à l'autre des parois latérales 4 et 5 forment avec le fond une gorge 6 qui s'élargit vers le bas. Lors du montage de la feuille de verre par collage, le cordon de collage est extrudé dans cette gorge 6. En choisissant des matières appropriées pour le cordon profilé 2 et/ou pour le cordon de collage, on peut empêcher un collage adhésif entre les deux matériaux de façon que l'assemblage de la feuille de verre avec le cordon de collage ait lieu uniquement ou tout au moins surtout par l'ancrage mécanique du cordon de collage dans la gorge 6 avec une forme en contre-dépouille. Il en résulte un avantage important quand il faut démonter ultérieurement la feuille de verre pour une raison quelconque car le démontage du vitrage peut être provoqué simplement par pression sur la feuille de verre, les parois latérales déformables élastiquement 4 et 5 du cordon profilé 2 cédant et se détachant de la masse de colle de montage durcie.

On comprendra que le cordon profilé en forme de cadre 2 doit comporter une gorge de bout en bout pour que le montage par collage d'une feuille de verre de ce genre soit parfait. Néanmoins, il n'est pas possible d'obtenir ce canal continu 6 par extrusion dans la zone de transition du profilé 2, c'est-à-dire à l'emplacement du segment initial 9 et du segment final 10 du profilé extrudé. En effet, quand on pose et qu'on soulève la filière extrudeuse, il se forme à ces emplacements des zones de transition irrégulières et déformées 11, qu'il faut postformer par une phase opératoire supplémentaire.

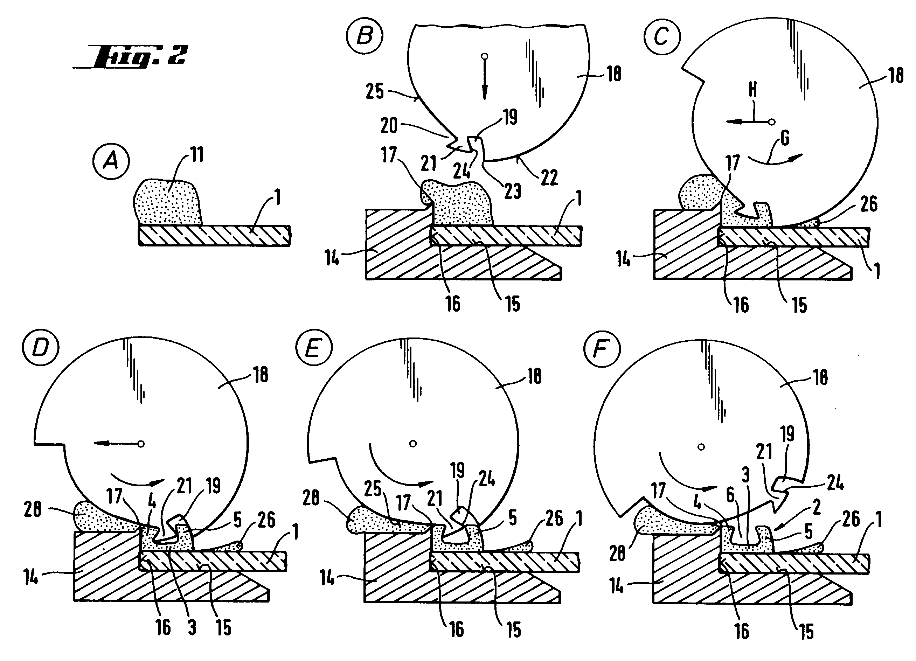

Le procédé de postformage de cette zone transitoire 11 sur la surface du vitrage 1 dont le cordon profilé présente la coupe transversale représentée à la figure 1 apparaît en détail à la figure 2. Pour réaliser ce procédé, il faut un moule inférieur 14 et un moule supérieur 18. Le moule inférieur 14 comporte une surface d'appui 15 pour la feuille de verre 1 et une surface latérale 16 perpendiculaire à la première qui sert d'appui au chant du vitrage 1. En outre, à l'extrémité supérieure de la surface latérale 16 est disposée une arête coupante 17 qui a la forme d'un tranchant et dont la fonction sera expliquée plus loin. Sur cette partie inférieure de moule 14 on dépose la feuille de verre 1 dans la zone de transition et on la pousse contre la surface latérale 16 du moule. Les parties de masse de polymère qui dépassent le bord de la feuille sont ainsi limitées latéralement, de sorte que le cordon de polymère 11 se termine à fleur du chant de la feuille de verre.

L'organe de pressage supérieur 18 se compose d'un rouleau monté en rotation dont la surface de pressage proprement dite présente la forme d'un segment de cylindre dans la surface latérale duquel est ménagée la structure de pressage. L'axe de rotation de cet outil correspond à l'axe du segment de cylindre. L'arbre portant l'organe de pressage 18, qui n'est pas représenté dans le croquis schématique est monté de façon à pouvoir effectuer un mouvement de translation parallèle à lui-même, c'est-à-dire en restant parallèle au chant du vitrage.

On peut voir en détail à la figure 2 que la structure de moulage proprement dite consiste en une cavité 19 ménagée dans la surface latérale qui lors de la rotation forme la nervure latérale 5 du profil, d'une cavité 20 qui forme le côté et le haut de la nervure latérale 4 et d'un poinçon en forme de queue d'aronde 21, qui forme la gorge 6 du profilé lors du déroulement de l'organe de pression. Le contour précis des cavités 19 et 20 ainsi que du poinçon 21 dépendent de la section du cordon profilé que l'on souhaite dans chaque cas et leur construction doit se déterminer au coup par coup.

La figure 2 représente diverses phases successives A jusqu'à F de la compression par roulement effectuée au moyen des outils décrits. Quand le vitrage 1 est placé dans le moule inférieur 14 (phase B) l'organe de pressage supérieur 18 se trouve dans une position telle au-dessus de la feuille de verre 1 que l'arête coupante (tranchant) 23 formée par la surface extérieure cylindrique 22 de l'organe de pressage supérieur et par la surface latérale de la cavité 19 se trouve exactement au-dessus de la périphérie de la paroi latérale 5 du cordon. A cette position, l'outil de compression supérieur s'abaisse jusqu'à ce que l'arête coupante 23 touche presque la surface du verre. Lors de cette phase C, le surplus de masse polymère est repoussé de la zone de transition 11, du côté orienté vers la surface de la feuille de verre, et repoussé latéralement. La bande restante 26 ainsi formée est facile à enlever ensuite de la surface du verre après le durcissement. D'autre part, quand l'organe de pressage supérieur 18 s'enfonce, le poinçon en queue d'aronde 21 pénètre dans la masse polymère et commence à former la gorge 6. Dès que l'arête coupante 23 atteint sa position finale peu au-dessus ou directement sur la surface du verre, l'organe 18 commence sa rotation dans le sens de la flèche G et sa translation simultanée dans le sens de la flèche H.

La rotation et la translation de l'organe 18 se poursuivent, de sorte que le mouvement qui suit la phase D consiste en un pur déroulement. Pendant cette phase, la surface du moule délimitant la cavité 20 s'approche en outre de l'arête coupante 17 ce qui tranche la masse polymère excédentaire poussée vers l'extérieur. Ensuite, le déroulement du moule 18 se poursuite encore brièvement ce qui tire un peu vers le haut la matière de la paroi 4 de la cavité qui s'amincit lorsque le poinçon 21, à la suite du mouvement de rotation et de translation, tourne en remontant. Dans ce mouvement, il respecte la contre-dépouille de la paroi 4. Ce déroulement se poursuit jusqu'à ce que l'arête 24 délimitant vers le haut le poinçon 21 puisse s'extraire vers le haut par rotation sans déformer la surface interne de la paroi latérale 5. A ce moment correspond la phase E. La translation de l'organe de pressage s'interrompt alors tandis que la rotation se poursuit (phase F) jusqu'à ce que le poinçon 21 soit entièrement extrait de la gorge 6 par rotation. Le glissement qui se produit alors entre la surface 25 délimitant la cavité 20 et la masse polymère excédentaire 28 ne nuit pas au profilé. A la fin de la phase F, l'organe de pressage 18 est soulevé. Le postformage est terminé et la feuille de verre 1 est retirée du moule inférieur. Le procédé de l'invention se caractérise en ce qu'un organe de pressage supérieur en forme de rouleau, dans la surface cylindrique duquel est ménagé un moule est conduit sur la zone de transition à postformer par rotation autour de l'axe du cylindre et par translation parallèlement à la surface de l'objet et perpendiculairement à la direction du cordon. De préférence, les mouvements de rotation et de translation sont combinés pour que l'organe de pressage déroule sa surface sur le cordon sans glissement par rapport à lui.

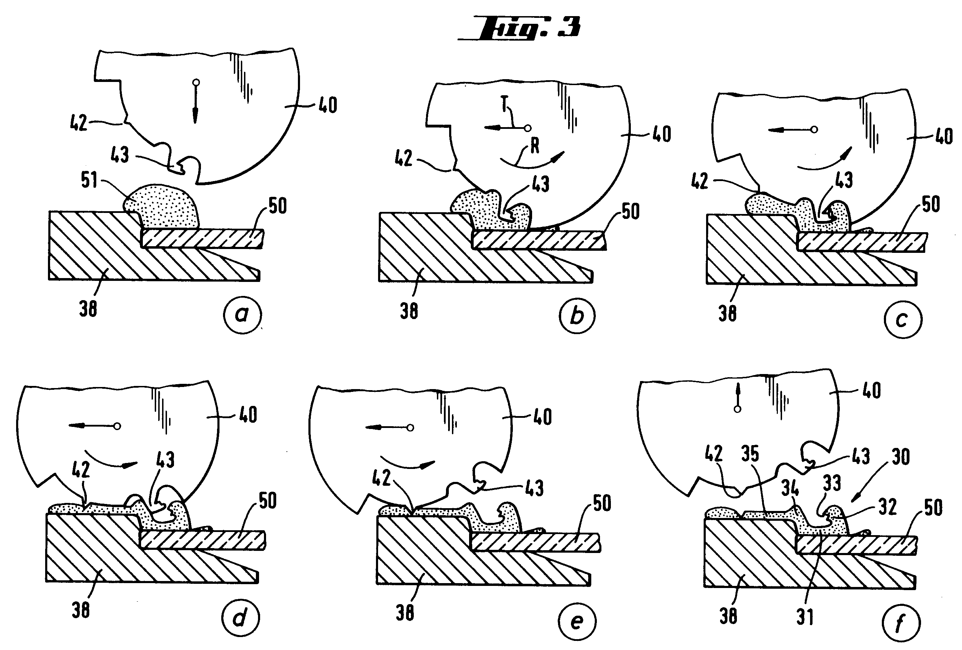

Ce procédé permet aussi de former des profilés en U dont une paroi latérale est pourvue de cannelures d'ancrage saillantes sur le côté de la gorge. Un exemple de réalisation de ce genre est représenté de nouveau à la figure 3 au moyen de plusieurs phases consécutives du postformage. Dans ce cas, il s'agit de mouler un profil 30 qui, à la fin du postformage, phase F, comporte un fond 31, une paroi latérale intérieure 32 pourvue de cannelures d'ancrage 33 sur le côté de la gorge, une paroi latérale extérieure 34 et une lèvre 35 qui déborde latéralement de la surface périphérique de la feuille de verre en servant de lèvre d'étanchéité et de centrage pendant et après le montage de la feuille de verre dans la carrosserie de l'automobile.

Le moule intérieur 38 est constitué comme dans l'exemple décrit précédemment. Fondamentalement, l'organe de pressage supérieur 40 lui aussi est construit et installé comme le décrit l'exemple précédent. Néanmoins, à la différence de l'exemple précédent, le tranchant 42 qui limite la lèvre 35 vers l'extérieur est disposé sur l'organe de pressage supérieur monté en rotation.

Le déroulement des différentes phases est sensiblement comparable à celui décrit précédemment. A la phase a) la feuille de verre 50 est positionnée sur le moule inférieur avec la masse de polymère formant la zone de transition 51 et l'outil est abaissé sur la feuille de verre. A la fin de l'abaissement commence à la phase b) le déroulement de l'organe de pressage dans le sens des flèches R et T, ce qui forme les cannelures 33 du côté intérieur de la paroi 32 à l'aide des dents correspondantes du poinçon 43. Ce déroulement du cylindre composé du mouvement de rotation R et du mouvement de translation T se poursuit en conservant les deux composantes du mouvement pendant les phases c, d et e qui suivent. Le mouvement de translation assure alors qu'après le moulage des cannelures 33 le poinçon 33 s'éloigne de la paroi sans que les cannelures 33 soient déformées par la rotation du cylindre 40. Pendant les phases d et e, le poinçon 43 est extrait de la gorge du profilé. En même temps, la paroi extérieure 34 est moulée et le tranchant 42 découpe la masse excédentaire de polymère tandis que la lèvre est pourvue d'une limite nette. Pendant la phase f, le moule est soulevé. La feuille de verre 5O avec sa zone de transition postformée peut être extraite du moule inférieur.

Avant la réalisation du procédé et du dispositif de l'invention, lorsqu'on extrudait un cordon en boucle à la surface d'un objet, le cordon comportant une gorge avec contre-dépouille (cette expression recouvrant également les cannelures de la figure 3), on ne pouvait éviter d'interrompre la gorge dans la zone de raccordement entre la fin et le début de l'extrusion. L'invention a ainsi permis de réaliser pour la première fois un objet tel qu'un vitrage avec un cordon extrudé à sa surface où le cordon possède une gorge ininterrompue avec une contre-dépouille.

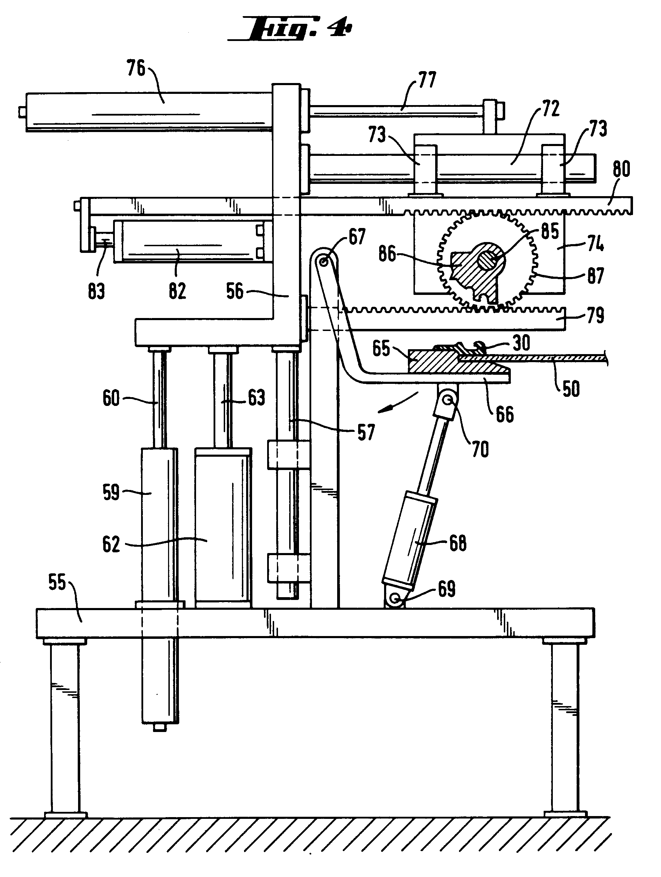

Une machine qui permet de réaliser le procédé est représentée à la figure 4 avec ses caractéristiques essentielles. Sur le bâti de la machine 55, d'une part, un cadre 56 est monté de façon déplacable verticalement. Le cadre 56 est monté coulissant grâce à un système de tiges et de bagues à billes. Le frein hydraulique 59 auquel le cadre 56 est raccordé par la barre 60 sert à amortir le mouvement vertical. Le mouvement vertical est commandé par le vérin 62 qui transmet le mouvement d'élévation par la tige de piston 63 au cadre 56.

Contre le cadre 55 en outre, une plaque 66 portant la partie inférieure du moule 65 est disposée en rotation autour d'un axe de pivotement 67. La rotation de cette plaque 66 est effectuée par le vérin 68 fixé d'un côté sur le cadre de machine 55 par un palier de pivotement 69 et de l'autre côté à la plaque 66 par un palier 70.

Sur le cadre 56 déplacable verticalement est disposé un arbre de guidage horizontal 72 sur lequel un chariot 74 déplacable est disposé de façon coulissante. L'amortissement et le freinage du mouvement horizontal du chariot 74 sont assurés par le frein hydraulique 76 qui agit sur le chariot 74 par la tige de piston 77. En outre, une crémaillère 79 est fixée sur le cadre 56 avec les dents vers le haut. Une deuxième crémaillère 79 est montée de façon déplacable contre le cadre 56 avec les dents vers le bas. La crémaillère 80 est actionnée par le vérin 82 dont la tige de piston 83 est raccordée à la crémaillère 80.

Entre les deux crémaillères 79 et 80, un arbre horizontal 85 est monté sur le chariot 74. Sur cet arbre 85 sont fixés d'une part l'organe de pressage supérieur 86 proprement dit et d'autre part une roue dentée. La roue dentée est engrenée tant avec la crémaillère inférieure qu'avec la crémaillère supérieure 80. Quand la crémaillère supérieure 80 est déplacée par le vérin 82, l'organe de pressage supérieur 86 effectue le déroulement souhaité.

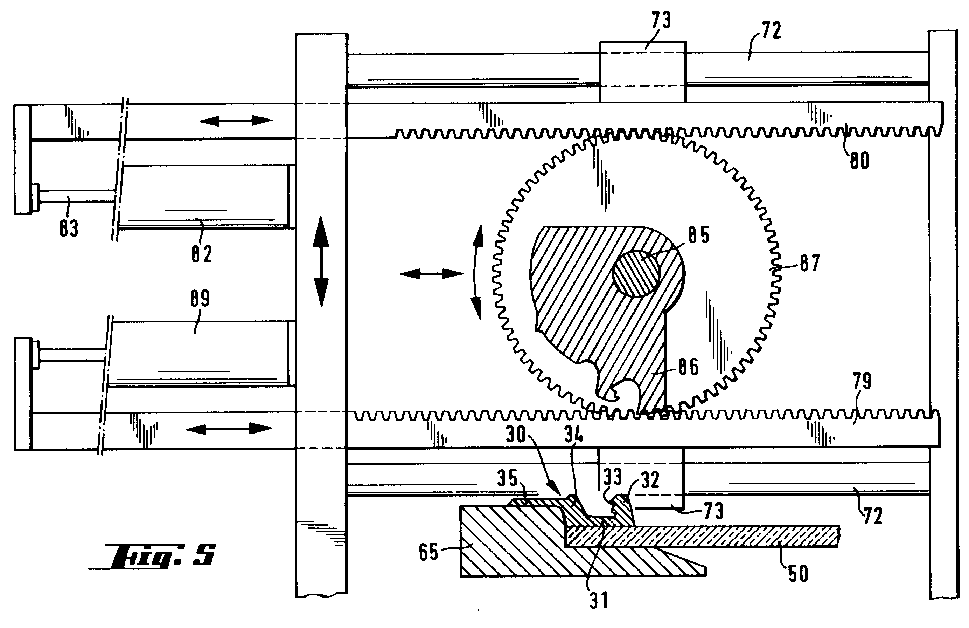

Quand, comme il est décrit à l'exemple de la figure 2, le mouvement de translation et celui de rotation doivent s'effectuer indépendamment l'un de l'autre, comme le suggère la figure 5, la crémaillère inférieure doit aussi être montée de façon déplacable et pourvue d'un entraînement propre. Dans ce cas, la crémaillère 79 est aussi couplée avec la tige de piston d'un vérin 89 fixé au cadre 56. En commandant les mouvements horizontaux des deux crémaillères 79 et 80 on peut maintenant effectuer de n'importe quelle façon tant des mouvements de translation pure que des mouvements de rotation, et en outre, toutes les combinaisons souhaitées de ces deux mouvements.

Pour effectuer le postformage, on dépose la feuille de verre 50 sur le moule inférieur 65 et on la positionne. Au moyen d'une commande mécanique non représentée, le cadre 56 est ensuite abaissé par actionnement du vérin 62 jusqu'à ce que l'outil 86 touche presque la surface de la feuille de verre 50. Ensuite, le roulement moulant de l'outil 86 est effectué par actionnement du vérin 82 et, le cas échéant, du vérin 89. A l'achèvement du moulage, le cadre 56 est soulevé par l'actionnement du vérin 62. Alors, la commande du vérin 68 de la plaque 66 imprime un basculement vers le bas en s'éloignant de la feuille de verre, vers l'extérieur. La feuille de verre 50 et le profil postformé 30 qui peut éventuellement adhérer légèrement au moule 65 sont ainsi détachés du moule 65. Il est alors facile de retirer la feuille de verre 50. En outre, le moule 65 peut être pourvu de moyens de chauffage ou de refroidissement, ce qui, selon la matière d'extrusion utilisée, permet d'accélérer le durcissement par refroidissement ou la réaction par réchauffement du polymère.

La technique qui vient d'être décrite en détail dans le cas du postformage d'un cordon profilé avec une zone de transition là où le début et la fin de l'extrusion d'une matière malléable durcissable, peut être mise en oeuvre dans d'autres cas : chaque fois qu'on désire créer dans une telle matière, une gorge rectiligne avec une contre-dépouille et/ou quand elle comporte des cannelures d'ancrage.

## Revendications

1. Procédé de formage d'une matière malléable durcissable déposée à la surface d'un objet (1) pour y créer une gorge (6) rectiligne avec une contre-dépouille et/ou des cannelures d'ancrage, **caractérisé en ce qu'**on introduit dans la matière puis on l'en extrait un poinçon (21, 43) en forme de profilé dont la section est localement plus étroite que la gorge (6), **et en ce qu**'il est animé de mouvements de rotation (R) et de translation (T) perpendiculairement à sa direction.

2. Procédé de formage selon la revendication 1, **caractérisé en ce que** le premier mouvement est un mouvement de translation vers la surface de l'objet (1) **et en ce qu**'il est suivi d'un mouvement de rotation (R) et simultanément de translation (T) parallèlement à la surface.

3. Procédé de formage selon la revendication 2, **caractérisé en ce que** le deuxième mouvement de rotation (R) et de translation (T) parallèlement à la surface sont réglés l'un sur l'autre de telle sorte que le mouvement du poinçon (21, 43) s'effectue sans glissement au fond de la gorge (6).

4. Procédé de formage selon la revendication 3, **caractérisé en ce que** le poinçon fait partie d'un rouleau cylindrique (18) qui roue sans glissement par rapport à la surface de l'objet (1).

5. Procédé de formage selon la revendication 3, **caractérisé en ce que** la matière malléable à la surface de l'objet (1) est la zone (11) de raccordement entre le début et la fin d'un cordon (2) en forme de boucle, lui-même avec une gorge (6) à contre-dépouille ou avec des cannelures d'ancrage.

6. Dispositif de réalisation du procédé selon la revendication 1, avec un moule inférieur (14 ; 38, 65) et un organe de pressage supérieur, déplaçable par rapport au moule inférieur (14 ; 38 ; 65) **caractérisé en ce que** l'organe de pressage supérieur (18 ; 40; 86) consiste en une surface cylindrique qui comporte sur la surface latérale du cylindre, orienté selon une génératrice, un poinçon (21 , 43) en queue d'aronde (21, 43) l'organe de pressage étant monté en rotation autour de l'axe du cylindre, l'axe de rotation étant monté de façon déplacable parallèlement à lui-même.

7. Dispositif selon la revendication 6, **caractérisé en se que** le moule inférieur (14) ou l'organe de pressage supérieur est pourvu d'un tranchant (17 ; 42) découpant la matière malléable excédentaire à la fin du formage.

8. Dispositif selon l'une des revendications 6 ou 7, **caractérisé en ce que** l'organe de pressage supérieur est fixé sur un arbre (85) monté en rotation, sur lequel est disposée une roue dentée (80) engrenée avec une crémaillère inférieure (79) et avec une crémaillère supérieure (80).

9. Dispositif selon la revendication 8, **caractérisé en ce que** l'une des crémaillères (79) contre laquelle le dispositif portant l'organe de pressage supérieur est fixe et que l'autre (80) est mobile latéralement.

10. Dispositif selon la revendication 8, **caractérisé en ce que** les deux crémaillères (79, 80) sont montées de façon déplacable dans leur sens longitudinal et peuvent être déplacées chacune par un élément moteur (82, 89).

11. Dispositif selon l'une des revendications 6 à 10, **caractérisé en ce que** le moule inférieur (65) est disposé sur une plaque (66) montée de façon basculante et que, pour basculer la plaque (66) après formage, il est prévu un vérin (68) articulé sur la plaque (66).

12. Objet tel qu'un vitrage avec un cordon extrudé en forme de boucle à sa surface, **caractérisé en ce que** le cordon possède une gorge ininterrompue avec une contre-dépouille obtenue par le procédé de la revendication 1.

## Claims

1. Method of forming a hardenable malleable material deposited on the surface of an object (1) in order to create thereon a rectilinear groove (6) with an undercut and/or anchoring flutings, characterised in that a punch (21, 43) in the form of a profiled member whose cross section is locally narrower than the groove (6) is introduced into the material and then extracted therefrom, and in that it is driven in rotation (R) and translation (T) movements perpendicularly to its direction.

2. Forming method according to Claim 1, characterised in that the first movement is a translation movement towards the surface of the object (1) and in that it is followed by a movement of rotation (R) and simultaneously of translation (T) parallel to the surface.

3. Forming method according to Claim 2, characterised in that the second movement of rotation (R) and translation (T) parallel to the surface are set with respect to each other so that the movement of the punch (21, 43) takes place without sliding on the bottom of the groove (6).

4. Forming method according to Claim 3, characterised in that the punch forms part of a cylindrical roller (18) which rolls without sliding with respect to the surface of the object (1).

5. Forming method according to Claim 3, characterised in that the malleable material on the surface of the object (1) is the connection zone (11) between the start and the end of a bead (2) in the form of a loop, itself with a groove (6) with an undercut or with anchoring flutings.

6. Device for implementing the method according to Claim 1, with a bottom mould (14; 38, 65) and a top pressing member which can be moved with respect to the bottom mould (14; 38; 65), characterised in that the top pressing member (18; 40; 86) consists of a cylindrical surface which has, on the lateral surface of the cylinder, oriented along a generator, a punch (21, 43) in the shape of a dovetail (21, 43), the pressing member being mounted so as to rotate about the axis of the cylinder, the axis of rotation being mounted so that it can be moved parallel to itself.

7. Device according to Claim 6, characterised in that the bottom mould (14) or the top pressing member is provided with a cutting edge (17; 42) cutting the excess malleable material at the end of the forming.

8. Device according to one of Claims 6 or 7, characterised in that the top pressing member is fixed to a shaft (85) mounted so as to rotate, on which there is disposed a toothed wheel (80) meshing with a bottom rack (79) and with a top rack (80).

9. Device according to Claim 8, characterised in that one of the racks (79) against which the device carrying the top pressing member is fixed and in that the other (80) is able to move laterally.

10. Device according to Claim 8, characterised in that the two racks (79, 80) are mounted so as to be able to move in their longitudinal direction and can each be moved by a driving element (82, 89).

11. Device according to one of Claims 6 to 10, characterised in that the bottom mould (65) is disposed on a plate (66) mounted so as to tilt, and in that, in order to tilt the plate (66) after forming, a jack (68) is provided, articulated on the plate (66).

12. Object such as glazing with an extruded bead in the form of a loop on its surface, characterised in that the bead has an uninterrupted groove with an undercut obtained by the method of Claim 1.

## Patentansprüche

1. Verfahren zum Formen eines auf der Oberfläche eines Gegenstandes (1) abgelegten verformbaren und härtbaren Materials zur Herstellung einer geradlinigen Hohlkehle (6) mit einem Hinterschnitt und/oder mit Verankerungsvorsprüngen, **dadurch gekennzeichnet,** daß eine Formleiste (21;43), deren Querschnitt örtlich schmäler ist als die Hohlkehle (6), in das Material eingeführt und wieder herausgezogen wird, und daß ihr eine Rotationsbewegung (R) und eine senkrecht zu ihrer Längsrichtung ausgerichtete Translationsbewegung (T) erteilt wird.

2. Verfahren zum Formen nach Anspruch 1, dadurch gekennzeichnet, daß die erste Bewegung eine Translationsbewegung in Richtung auf die Oberfläche des Gegenstandes (1) ist, und daß ihr eine Bewegung aus einer Rotation (R) und einer gleichzeitig parallel zu der Oberfläche verlaufenden Translation (T) folgt.

3. Verfahren zum Formen nach Anspruch 2, dadurch gekennzeichnet, daß die zweite Bewegung aus einer Rotation (R) und einer parallel zur Oberfläche verlaufenden Translation (T) so aufeinander abgestimmt werden, daß die Bewegung der Formleiste (21,43) erfolgt, ohne daß sie auf dem Boden der Hohlkehle (6) gleitet.

4. Verfahren zum Formen nach Anspruch 3, dadurch gekennzeichnet, daß die Formleiste Teil einer zylindrischen Rolle (18) ist, die im Verhältnis zur Oberfläche des Gegenstandes (1) abrollt, ohne zu gleiten.

5. Verfahren zum Formen nach Anspruch 3, dadurch gekennzeichnet, daß das verformbare Material auf der Oberfläche eines Gegenstandes (1) die Verbindungszone (11) zwischen dem Anfang und dem Ende eines rahmenförmigen Strangs (2) ist, der seinerseits mit einer Hohlkehle (6) mit Hinterschnitt oder mit Verankerungsrillen versehen ist.

6. Vorrichtung zur Durchführung des Verfahrens nach Anspruch 1, mit einer unteren Form, (14;38,65) und einem oberen, relativ zur unteren Form (14;38;65) bewegbaren oberen Preßorgan, dadurch gekennzeichnet, daß das obere Preßorgan (18;40;86) aus einer zylindrischen Fläche besteht, die auf der Seitenfläche des Zylinders eine in Richtung der Erzeugenden ausgerichtete Formleiste (21;43) in Schwalbenschwanzform umfaßt, wobei das Preßorgan um die Zylinderachse drehbar gelagert ist, und die Drehachse parallel zu sich selbst verschiebbar gelagert ist.

7. Vorrichtung nach Anspruch 6, dadurch gekennzeichnet, daß die untere Form (14) oder das obere Preßorgan mit einer das überschüssige verformbare Material am Ende des Formvorgangs abtrennenden Schneidkante (17;42) versehen ist.

8. Vorrichtung nach Anspruch 6 oder 7, dadurch gekennzeichnet, daß das obere Preßorgan auf einer drehbar gelagerten Welle (85) fest angeordnet ist, auf der ein mit einer unteren Zahnleiste (79) und mit einer oberen Zahnleiste (80) kämmendes Zahnrad angeordnet ist.

9. Vorrichtung nach Anspruch 8, dadurch gekennzeichnet, daß eine der Zahnleisten (79) an der das obere Preßorgan tragenden Vorrichtung starr angeordnet ist, und die andere (80) seitlich verschiebbar ist.

10. Vorrichtung nach Anspruch 8, dadurch gekennzeichnet, daß beide Zahnleisten (79;80) in ihrer Längsrichtung verschiebbar gelagert und jeweils durch ein Antriebselement (82;89) verschiebbar sind.

11. Vorrichtung nach einem der Ansprüche 6 bis 10, dadurch gekennzeichnet, daß die untere Form (65) auf einer verschwenkbar gelagerten Platte (66) angeordnet ist, und daß zur Verschwenkung der Platte (66) nach dem Formvorgang ein an die Platte (66) angelenkter Zylinder (68) vorgesehen ist.

12. Gegenstand, beispielsweise eine Glasscheibe mit einem auf ihrer Oberfläche extrudierten rahmenförmigen Strang, dadurch gekennzeichnet, daß der Strang eine ununterbrochene Hohlkehle mit einer durch das Verfahren nach Anspruch 1 erhaltenen Hinterschneidung aufweist.
